# EUROPEAN PATENT SPECIFICATION

(11) **EP 3 609 945 B1**
(45) Date of publication and mention of the grant of the patent: **13.01.2021**
(21) Application number: 18716273.0
(22) Date of filing: 09.04.2018
(51) Int. Cl.: C08G 18/76, C08G 18/48, C08G 18/66, C08G 18/12, C08G 18/18, C08J 9/12, C08G 18/10, C08G 18/32, C08G 18/42

(54) **DISPERSION OF MAGNETIZABLE PARTICLES IN POLYOL, ITS PREPARATION AND USE**
DISPERSION VON MAGNETISIERBAREN PARTIKELN IN POLYOL, DEREN HERSTELLUNG UND VERWENDUNG
DISPERSION DE PARTICULES MAGNÉTISABLES DANS LE POLYOL, SA PRÉPARATION ET SON UTILISATION

(30) Priority: 10.04.2017 EP 17165750
(43) Date of publication of application: 19.02.2020
(73) Proprietor: BASF SE, 67056 Ludwigshafen am Rhein (DE)
(72) Inventor: THIELBEER, Frank, 67056 Ludwigshafen (DE); DOROODIAN, Amir, 49448 Lemfoerde (DE); KOENIG, Christian, 67056 Ludwigshafen (DE)
(74) Representative: BASF IP Association
(86) International application number: PCT/EP2018/058996
(87) International publication number: WO 2018/189088

(56) References cited:
- EP-A1- 2 151 472
- WO-A1-2006/024457
- WO-A1-2008/074701
- WO-A2-2014/144352

## Description

The present invention relates to a process for preparing a dispersion of magnetizable particles in polyol, a dispersion of magnetizable particles in a polyol, the use of a polyol for dispersing magnetizable particles, the use of the dispersion for preparing a polyurethane, a process for preparing a polyurethane and the polyurethane thus obtainable.

Polyurethanes containing magnetizable particles are known per se from the prior art.

WO 2008/104491 discloses polyurethane foams having changeable mechanical properties, which consist of an elastic foam which is impregnated with an elastic material comprising magnetizable particles. The foams have magnetically changeable mechanical properties. A polyurethane gel containing the magnetizable particles is dispersed in the elastic polyurethane foam.

JP-A-2009249513 discloses a polyurethane foam containing a metal powder. For example stainless steel powder can be suspended in water, and this slurry is mixed with a prepolymer and a crosslinker. The prepolymer was a polyester polyol prepolymer.

US 8,282,851 relates to anisotropic cellular elastomers. A prepolymer having isocyanate groups is mixed with carbonyl iron powder and a crosslinker component. The finished system is reacted under the influence of a magnetic field. The chain-like structures of the carbonyl iron particles along the spatial direction in which the magnetic field lines were oriented were observed. The compressive modulus of the material produced in this way was anisotropic along the orientation direction of the iron particles and in the two spatial directions perpendicular thereto. It is furthermore stated that when the cellular polyurethane elastomer is not produced in a two-stage process involving a prepolymer, the magnetizable particles at the outset are preferably added to the compound which is reactive towards isocyanates and homogeneously dispersed therein by stirring, shaking or other mixing methods.

WO 2014/144352 discloses a dispersion of Fe₃O₄ in polyols which have an acid number of 2 mg/KOH/g, see paragraphs [00030] to [00032]. The preparation is performed at a temperature of 110°C. It is stated that the nano particulate material can impart magnetic activity to the resulting composition.

WO 2008/074701 discloses a dispersion of magnetizable particles in polyols, employing carbonyl iron powder. The magnetizable particles can be added to the isocyanate component or component reactive with isocyanates. In the example, carbonyl iron powder is mixed with a prepolymer containing isocyanate groups. The polymerization can be performed under the influence of a magnetic field. By applying the magnetic field chain-like structures of the carbonyl iron particles along the magnetic field lines could be observed. It is stated that the material shows magnetorheological properties.

EP-A-2 151 472 relates to resin compositions for food containers. The resin composition comprises polyethylene terephthalate, titanium oxide and iron oxide as fillers. The pigments and especially the titanium oxide are added to the ester mixture produced in a first step from terephthalic acid and ethylene glycol, thus to the not yet polymerized mixture.

However, it was found by the present inventors that not at all times stable dispersions of the magnetizable particles could be obtained in this way.

Therefore, the object underlying the present invention is to provide a process for preparing a stable dispersion of magnetizable particles in polyols. The dispersion shall be used for preparing polyurethanes, in which different degrees of hardness can selectively be introduced during the reaction by selectively applying magnetic fields to different areas of the reacting mixture.

The object is achieved according to the present invention by a process for preparing a dispersion of magnetizable particles in polyol having ferromagnetic or ferrimagnetic properties by mechanical mixing of the magnetizable particles at a temperature in the range of from 80 to 260°C, preferably 100 to 220°C, more preferably 160 to 200°C with a polyol selected from the group consisting of polyesterols or polyether ester polyols having an acid number in the range of from 0.1 to1.0 mg KOH/g polymer, determined by DIN EN 12634 from 1999.

The object is furthermore achieved by a dispersion of magnetizable particles having ferromagnetic or ferrimagnetic properties in a polyol selected from the group consisting of polyesterols or polyether ester polyols having an acid number in the range of from 0.1 to 1.0 mg KOH/g polymer, determined by DIN EN 12634 from 1999.

The object is furthermore achieved by the use of a polyol selected from the group consisting of polyesterols or polyether ester polyols having an acid number in the range of from 0.1 to 1.0 mg KOH/g polymer, determined by DIN EN 12634 from 1999 for dispersing magnetizable particles having ferromagnetic or ferrimagnetic properties to form a dispersion of the magnetizable particles in the polyol.

The object is furthermore achieved by the use of the above dispersion for preparing a polyurethane.

The object is furthermore achieved by a process for preparing a polyurethane, comprising mixing a dispersion as described above or prepared by the above process with polyisocyanates and, if appropriate, one or more further compounds having hydrogen atoms which are reactive towards isocyanates, chain extenders and/or crosslinkers, catalysts, blowing agents and further additives, and reacting the mixture to form the polyurethane, wherein a permanent magnetic field is applied to the mixture during its reaction to form the polyurethane, the permanent magnetic field preferably being sufficiently strong to orient or move the magnetizable particles within the mixture,
wherein the reaction takes place in a mold and the permanent magnetic field is applied to only parts of the mold so that part of the reacting mixture is under the influence of the magnetic field and other part of the reaction mixture is under no or less influence of the magnetic field during its reaction to form the polyurethane and
wherein the magnetic field is preferably applied in a perpendicular direction to the long axis of the mold and
wherein the hardness of the polyurethane is controlled by locally or totally adjusting the strength and/or duration of the magnetic field over the reaction time.

The object is furthermore achieved by a polyurethane, obtainable by the above process.

According to the present invention, it has been found that a stable dispersion of magnetizable particles in polyol can be obtained when the polyol is a polyesterol or a polyether ester polyol having a specific acid number in the range of from 0.1 to 1.0, specifically 0.4 to 1.0.

The acid number is determined by DIN EN 12634 from 1999 and refers to mg KOH/g polymer. This unit is included in the meaning of the above number.

The lower the acid number is, the better the PU preparation becomes since basic PU catalysts may be neutralized by the acid and accordingly higher amounts are required.

The acid number relates to the total of the polyol. Thus, the polyol can be one single type of carboxyl group containing polyol. It can, however, also be a combination of a polyol having higher amounts of carboxyl groups in admixture with polyols having lesser amounts of carboxyl groups or no carboxyl groups at all.

By employing polyols having acidic (carboxylic acid) groups, the magnetic particles can bind to these sites and therefore, the polyesterol can act as a stabilizer for the dispersion of the magnetizable particles.

The polyol can be a polyetherol prepared from at least one starter molecule comprising 2 to 8 reactive hydrogen atoms and one or more alkylene oxides having from 2 to 4 carbon atoms in the alkylene radical.

The polyol can thus be selected from 2- to 8-functional, preferably 2- to 6-functional polyether ester polyols and/or polyester polyols of a molecular weight (Mₙ) of from 500 to 30000 g/mol, preferably 1000 to 20000 g/mol. Further polyol components are illustrated below.

Therefore, in the final dispersion, polyols different from the ones defined above may be additionally employed. According to one embodiment of the invention, no additional such polyols are employed.

A more detailed discussion of polyol can be found below.

In the dispersion, the amount of magnetizable particles, based on the sum of magnetizable particles and polyol, is preferably 1 to 35 wt%, more preferably 2 to 30 wt%, most preferably 5 to 20 wt%.

The magnetizable particles have ferromagnetic or ferrimagnetic properties. Preferably, they are selected from the group consisting of iron, cobalt, nickel, alloys thereof, magnetite, ferrite, perovskite or mixtures thereof. A more detailed discussion of the magnetizable particles can be found below.

The polyurethanes according to the present invention can be cellular elastomers which address all possible applications. They can be thermoplastic polyurethanes (TPUs), as well as foams. Foams or cellular polyurethanes can be hard or soft or segmented. Applications can be manifold, including shoe soles etc. The polyurethane moldings or foams can be preferably anisotropic without an external influence, in particular even without the action of a man-made magnetic field, with the anisotropy being defined by the compressive modulus, preferably measured by a method based on DIN ISO 7743, in one of 3 orthogonal directions being greater than that in the other two directions by a factor of at least 1.5, preferably a factor of from 2 to 50. In the cellular elastomers, the magnetizable particles can have a chain-like alignment, preferably parallel to one another along one spatial direction. In addition, in a process for producing those cellular elastomers, preferably cellular polyurethane elastomers, particularly preferably cellular polyurethane elastomers having a density in accordance with DIN EN ISO 845 in the range from 200 kg/m³ to 5000 kg/m³, with the density being based on the total weight of the cellular polyurethane elastomer, i.e. including the weight of the magnetizable particles, the cellular elastomers are produced in the presence of the magnetizable particles so that these magnetizable particles are present in the cellular elastomer and the production of the cellular elastomers is carried out in the presence of a preferably man-made magnetic field which has a flux density of greater than 0.01 tesla, preferably a flux density in the range from 0.05 to 2 tesla. A magnetic field is applied to the mixture during its reaction to form the polyurethane. The hardness of the polyurethane to be formed is controlled by locally or totally adjusting the strength and/or duration of the magnetic field over the reaction time. The reaction takes place in a mold and the magnetic field is applied to only parts of the molds so that part of the reaction mixture is under the influence of the magnetic field and other part of the reaction mixture is under no or less influence of the magnetic field. In this way, an increased hardness can be introduced in the areas of the molding which are exposed to the (stronger) magnetic field. In this way, the hardness of the polyurethane can be adjusted by placing the magnetic field in the according sections of the mold. The magnetic field can be applied in a perpendicular direction to the long axis of the mold. For example, shoe soles with different hardness in different segments of the shoe soles can be prepared in this manner. In addition, the present invention relates to cellular elastomers obtainable in this way, e.g. motor vehicle helper springs, motor vehicle shock absorber bearings, motor vehicle chassis bearings - but also shoe soles - comprising the cellular elastomers of the invention.

Cellular, for example microcellular, polyisocyanate polyaddition products, usually polyurethanes and/or polyisocyanurates which may if appropriate comprise urea structures and are obtainable by reaction of isocyanates with compounds which are reactive towards isocyanates, and processes for producing them are generally known.

A particular embodiment of these products is cellular, in particular microcellular, polyurethane elastomers which differ from conventional polyurethane foams in their significantly higher density of usually from 200 to 700 kg/m³, preferably from 300 to 700 kg/m³, their particular physical properties and the possible applications resulting therefrom. Such polyurethane elastomers are employed, for example, as vibration-absorbing and shock-absorbing elements, in particular in automobile construction. In automobiles, the spring elements produced from polyurethane elastomers are, for example, pushed onto the piston rod of the shock absorber in the overall shock-absorbing strut unit consisting of shock absorber, spiral spring and the elastomeric spring.

Cellular polyurethane elastomers can be produced only up to a particular material hardness since the material hardness is set only via the density. However, high hardnesses are absolutely necessary in wheel-conducting elastomer applications (bearings) in the area of suspension/chassis. A solution which allows an increase in hardness in one force direction (transverse to the vehicle) but leaves the other directions unchanged (soft) can be advantageous as well as higher overall hardness or hardness in selected areas.

Possible cellular polyurethane elastomers are generally known elastomers which can be produced in the presence of magnetizable particles. Such elastomers without the aligned magnetizable particles are generally known and have been described widely. The elastomers are preferably microcellular elastomers based on polyisocyanate polyaddition products, preferably ones having cells having a diameter of from 0.01 mm to 1 mm, particularly preferably from 0.01 to 0.25 mm. Elastomers based on polyisocyanate polyaddition products and their production are generally known and have been described widely, for example in EP-B 117 15 15, EP-A 62 835, EP-A 36 994, EP-A 250 969, DE-A 195 48 770 and DE-A 195 48 771.

The anisotropic properties or local hardness according to the invention of the cellular elastomers are preferably produced by the cellular elastomer comprising magnetizable particles having ferromagnetic or ferrimagnetic properties, particularly preferably soft magnetic ferromagnetics or ferrimagnetics.

The isotropic incorporation of magnetizable particles into cellular elastomers is known from WO 2006/007882. The isotropic or anisotropic incorporation of magnetizable particles into compact elastomers is known from U.S. Pat. No. 6,476,113 B1, US 2005/0116194 A1 or WO 2006/024457 A1. As materials for the magnetizable particles of the present invention, it is possible to use the materials described in the above-mentioned documents. These are preferably iron, cobalt, nickel (also in impure form) and alloys thereof, e.g. iron-cobalt, iron-nickel, magnetic steel, iron-silicon and/or mixtures thereof, also oxidic ceramic materials such as cubic ferrites, perovskites and garnets of the general formula MO.Fe₂O₃ comprising one or more metals from the group consisting of Mn, Fe, Co, Ni, Cu, Zn, Ti, Cd and magnesium and mixtures thereof. Mixtures such as MnZn, NiZn, NiCo, NiCuCo, NiMg, CuMg ferrites and/or mixtures thereof and also particles of iron carbide, iron nitride, alloys of vanadium, tungsten, copper and manganese and/or mixtures thereof are also suitable. A further particularly useful material is magnetite (Fe₃O₄) or ferrite (Fe₂O₃).

Preference is given to using magnetite particles as magnetizable particles. The magnetizable particles can preferably have a (arithmetical) mean longest dimension of from 0.01 to 1000 µm, more preferably 0.1 to 100 µm, in particular 0.5 to 10 µm.

The shape of the magnetizable particles can be uniform or irregular. For example, the particles can be spherical, rod-like or acicular. The spherical shape, i.e. the ball shape or a shape similar to the ball shape, is preferred particularly when high degrees of fill are sought.

When spherical particles are used, the (arithmetical) mean diameter [d₅₀] is preferably from 0.01 to 1000 µm, particularly preferably from 0.1 to 100 µm, in particular from 0.5 to 10 µm. The above-mentioned orders of magnitude for the mean diameter are particularly advantageous for production of the cellular elastomers of the invention because they lead to better redispersibility and a better flowability of the polyurethane components laden with the particles.

When spherical particles are not used, the mean longest dimension of the magnetizable particles used according to the invention is preferably from 0.01 to 1000 µm, preferably from 0.1 to 500 µm. When metal powder is used as magnetizable particles, this can be obtained, for example, by reduction of corresponding metal oxides. The reduction may, if appropriate, be followed by a sieving or milling process. Further ways of producing suitable metal powder is electrolytic deposition or the production of metal powder by means of water atomization or gas atomization. It is also possible to use mixtures of magnetizable particles. In particular, the size distribution of the magnetizable particles used can also be bimodal.

Preference is given to a plurality of parallel rows of magnetizable particles being present. The mean spacing of the rows becomes smaller as the degree of fill by magnetizable particles increases. By applying local magnetic fields, the particles can move in the reaction mixture and form non-uniform concentrations.

The cellular elastomer preferably comprises from 1 to 35 wt%, preferably from 2 to 30 wt% and 5 to 20 wt%, of magnetizable particles, based on the total weight of the cellular elastomer comprising the magnetizable particles.

In the process of the invention for producing cellular polyurethane elastomers, having a density in accordance with DIN EN ISO 845 in the range from 300 kg/m³ to 5000 kg/m³, with the density being based on the total weight of the cellular polyurethane elastomer, i.e. including the weight of the magnetizable or magnetic particles, the cellular elastomers are produced in the presence of magnetizable particles so that these magnetizable particles are present in the cellular elastomer and the production of the cellular elastomers is carried out in the presence of a magnetic field which preferably has a flux density of greater than 0.01 tesla, more preferably a flux density of from 0.1 to 2 tesla.

Production is carried out in a mold and the permanent magnetic field is applied to the mold so that part of the reaction mixture is under the influence of the magnetic field. Cellular polyurethane elastomers are particularly preferably produced in a mold by reaction of (a) isocyanates with (b) compounds which are reactive towards isocyanates, with magnetizable particles being comprised in the starting components (b). It can also be preferred to use prepolymers having isocyanate groups as isocyanates.

Here, the volume of the mold is filled totally or partially by a permanent magnetic field whose field lines run along the spatial direction in which the cellular elastomer is to have a greater elastic modulus. The permanent magnetic field can be produced by means of permanent magnets or electromagnets. The production of compact elastomers in the presence of a magnetic field is described in Ginder et al., Magnetorheological Elastomers: Properties and Applications, SPIE vol. 3675, pp 131, WO 2006/024457 and in US 2005/0116194 A1.

If the magnetic field is produced by means of permanent magnets, preference is given to arranging two permanent magnets in such a way that the north pole of the one magnet and the south pole of the other magnet face the interior of the mold. The magnets are preferably located in the walls of the mold or else outside the walls of the mold. Possible materials for the permanent magnets are all ferromagnetic or ferrimagnetic substances, preferably ferromagnetic metals, particularly preferably neodymium-iron-boron compounds which allow a particularly high permanent magnetization. Such magnets can be obtained, for example, from the internet supply company supermagnete.de. The permanent magnets are either present in the walls of the mold or outside the walls of the mold before filling of the mold or they are brought into their positions only after filling of the mold but before solidification has progressed to a significant degree.

When electromagnets are used, an electric conductor is usually wound around a yoke made of ferromagnetic or ferrimagnetic material, preferably soft magnetic iron. The yoke serves to increase the magnetic flux density and to conduct the magnetic field. The pole pieces of the yoke are let into the walls of the mold or are located outside the mold and the mold is in between in the space filled with the magnetic field. The magnetic field produced by the electromagnet is switched on either before filling of the mold or preferably after the mold is filled but before solidification has progressed to a significant degree.

A further possible way of producing the magnetic field is to use a combination of permanent magnets and electromagnets. The field of the permanent magnets can be compensated by an electromagnet in order to achieve a field-free state, e.g. during filling of the mold, and, moreover, the field of the permanent magnets can be reinforced by the electromagnet in order to achieve the required magnetic flux densities, particularly in the case of large cross sections of the cellular elastomer in the direction of the magnetic field lines.

The magnetics preferably exert a permanent magnetic field to the reaction mixture in the mold.

A specific embodiment of the combination of mold/magnet comprises a magnet structure (electromagnet or permanent magnet or a combination of the two) in the region of a mold charging facility (e.g. mixing head) and a sequential charging line or a carousel of molds which can be exposed to the magnetic field one after the other.

The design of the permanent magnets or the electromagnets can preferably be matched to the desired geometry of the cellular elastomer and the desired mechanical properties and their distribution throughout the geometry.

The permanent magnetic field is preferably maintained at least until the elastomer has cured to a sufficient extent and the location and arrangement of the magnetizable particles has been fixed.

The permanent magnetic field is sufficiently strong to orient or move the magnetizable particles within the mixture.

As material of the mold, it is possible to choose a nonmagnetic material such as aluminum so as not to disturb the magnetic field produced by the permanent magnets and/or electromagnets; alternatively, a magnetic material can be deliberately used in at least some regions in order to influence the magnetic field produced by the permanent magnets and/or electromagnets in an optimal way.

As indicated at the outset, methods of producing cellular polyurethane elastomers are generally known. Production of the cellular polyurethane elastomers can preferably be carried out in a two-stage process, particularly preferably by preparing a prepolymer having isocyanate groups by reaction of (a) isocyanate with (b) compounds which are reactive towards isocyanates and, if appropriate, chain extenders and/or crosslinkers (c) in the first stage and reacting this prepolymer with a crosslinker component comprising (d) water and, if appropriate, (e) catalysts, (f) blowing agents and/or (g) auxiliaries in a mold in the second stage to give a cellular or non-cellular polyurethane elastomer, with magnetizable particles being comprised in the prepolymer and/or the crosslinker component, preferably the crosslinker polyol.

The production of the preferred polyurethane elastomers is described by way of example below.

They are usually produced by reaction of isocyanates with compounds which are reactive towards isocyanates. The elastomers based on cellular polyisocyanate polyaddition products are usually produced in a mold in which the reactive starting components are reacted with one another. Molds which are suitable here are ones which, due to their shape, ensure the three-dimensional shape according to the invention of the spring element. In choosing the mold material, the interaction with the magnetic field can preferably be taken into account, as indicated above.

The process of the invention for producing the cellular elastomers can preferably be carried out by using the following starting materials:
(a) isocyanate,
(b) compound which is reactive towards isocyanates including the dispersion of the present invention,
(d) water;
   and, if appropriate,
(e) catalysts,
(f) blowing agents and/or
(g) auxiliaries,
   in a single-stage or two-stage process, with the magnetizable particles used according to the invention being added to one or more of the components mentioned.

When the cellular polyurethane elastomer is produced in a two-stage process in which a prepolymer having isocyanate groups is prepared in the first stage, the magnetizable particles mentioned at the outset are preferably added to the compound (b) or the polyol employed in forming the prepolymer and preferably very homogeneously dispersed therein by stirring, shaking or other mixing methods. The polyol or prepolymer with the magnetizable particles is then reacted with the other component in a second stage to give a cellular polyurethane elastomer.

When the cellular polyurethane elastomer is not produced in a two-stage process, the magnetizable particles mentioned at the outset are preferably added to the component (b) or parts of the component (b), with preference being given to components (d), (e), (f) and (g) already being comprised in the component (b). The magnetizable particles are preferably very homogeneously dispersed in the component (b) by stirring, shaking or other mixing methods at temperatures from 80 to 260°C, preferably 100 to 220°C, more preferably 160 to 200°C. Component (a), if appropriate also already comprising components (f) and (g), is then mixed in.

The production of the cellular polyisocyanate polyaddition products of the invention is preferably carried out in a mold having a surface temperature of the interior wall of the mold of from 50 to 100°C, preferably from 75 to 90°C. For the present purposes, the "surface temperature of the interior wall of the mold" is the temperature which the surface of the interior wall of the mold, i.e. the surface of the mold which is usually in contact with the reaction system in the production of the moldings has at least briefly, preferably for at least 10 minutes, during production of the moldings.

The production of the moldings is preferably carried out at an NCO/OH ratio of from 0.85 to 1.20, with the heated starting components being mixed and introduced in an amount corresponding to the desired density of the molding into a heated, preferably tightly closing mold.

The moldings are usually cured and thus able to be removed from the mold after from 1 to 40 minutes.

The amount of reaction mixture introduced into the mold is usually calculated so that the moldings obtained have the density indicated above. The cellular polyisocyanate polyaddition products which can be obtained according to the invention preferably have a density in accordance with DIN 53420 of from 200 to 5000 kg/m³, particularly preferably from 300 to 2000 kg/m³, with the density being based on the total weight of the cellular polyurethane elastomer, i.e. including the weight of the magnetizable or magnetic particles.

The starting components usually have a temperature of from 15 to 120°C, preferably from 30 to 110°C, when introduced into the mold. The degrees of compaction for producing the moldings are in the range from 1.1 to 8, preferably from 2 to 6.

The cellular polyisocyanate polyaddition products of the invention are advantageously produced by the "one-shot" process with the aid of the low-pressure technique or in a high-pressure process or in particular by the known reaction injection molding technique (RIM) in open or preferably closed molds. The reaction is, in particular, carried out with compaction in a closed mold.

When a mixing chamber having a number of inflow nozzles is used, the starting components can be fed in individually and be intensively mixed in the mixing chamber. It has been found to be advantageous to employ the two-component process.

In one embodiment, an NCO-comprising prepolymer is prepared first in a two-stage process. For this purpose, the component (b) and, if appropriate, chain extenders (c), e.g. butanediol, is/are reacted with an excess of (a) at temperatures of usually from 80°C to 160°C, preferably from 110°C to 150°C. The reaction time is chosen so as to reach the theoretical NCO content. The prepolymer comprising isocyanate groups preferably has an NCO content of from 1 wt% to 30 wt%, preferably from 2 wt% to 14 wt% and in particular from 3 wt% to 10 wt%.

The auxiliaries and/or additives (g) can preferably be comprised in the crosslinker component. As auxiliaries and additives (g) in the crosslinker component, preference is given to using at least one generally known carbodiimide as hydrolysis inhibitor, for example 2,2',6,6'-tetraisopropyldiphenylcarbodiimide, foam stabilizers such as silicone oils or surface-active substances for improving the homogeneity of the reaction mixture.

To improve demolding of the moldings produced according to the invention, it has been found to be advantageous to coat the interior surfaces of the mold with customary external mold release agents, for example ones based on wax or silicone, or in particular aqueous soap solutions, at least at the beginning of a production series.

The demolding times depend on the size and geometry of the molding and are on average from 1 to 40 minutes.

After production of the moldings in the mold, the moldings can preferably be heated at temperatures of usually from 70 to 140°C for a period of from 1 to 48 hours.

As regards the further starting components, the following may be said:
As isocyanates (a), it is possible to use generally known (cyclo)aliphatic and/or aromatic polyisocyanates. Particularly suitable polyisocyanates for producing the composite elements according to the invention are aromatic diisocyanates, preferably diphenylmethane 2,2'-, 2,4'- and/or 4,4'-diisocyanate (MDI), naphthylene 1,5-diisocyanate (NDI), toluoylene 2,4- and/or 2,6-diisocyanate (TDI), 3,3'-dimethylbiphenyl diisocyanate (tolidine diisocyanate (TODI)), 1,2-diphenylethane diisocyanate, p-phenylene diisocyanate and/or (cyclo)aliphatic isocyanates such as hexamethylene 1,6-diisocyanate, 1-isocyanato-3,3,5-trimethyl-5-isocyanatomethylcyclohexane and/or polyisocyanates such as polyphenylpolymethylene polyisocyanates. The isocyanates can be used in the form of the pure compound, in mixtures and/or in modified form, for example in the form of uret diones, isocyanurates, allophanates or biuretes, preferably in the form of reaction products comprising urethane and isocyanate groups, known as isocyanate prepolymers. Preference is given to using optionally modified diphenylmethane 2,2'-, 2,4'- and/or 4,4'-diisocyanate (MDI), naphthylene 1,5-diisocyanate (NDI), toluoylene 2,4- and/or 2,6-diisocyanate (TDI), tolidine diisocyanate (TODI), and/or mixtures of these isocyanates.

As compounds (b) which are reactive towards isocyanates, it is possible to use generally known polyhydroxyl compounds, preferably ones having a functionality towards isocyanate groups of from 2 to 3 and preferably a molecular weight of from 60 to 6000, particularly preferably from 500 to 6000, in particular from 800 to 3500. Preference is given to using generally known polyether polyols, polyester polyols, polyether ester polyols and/or hydroxyl-comprising polycarbonates as (b). Particular preference is given to using polyester polyols, polytetrahydrofuran (PTHF) and polypropylene glycol (PPG), which typically contain the magnetizable particles.

At least part, preferably all of the polyol compound (b) is the polyol dispersion of magnetizable particles according to the present invention.

Suitable polyester polyols can, for example, be prepared from dicarboxylic acids having from 2 to 12 carbon atoms and dihydric alcohols. Examples of possible dicarboxylic acids are: adipic acid, phthalic acid, maleic acid. Examples of dihydric alcohols are glycols having from 2 to 16 carbon atoms, preferably from 2 to 6 carbon atoms, e.g. ethylene glycol, diethylene glycol, 1,4-butanediol, 1,5-pentanediol, 1,6-hexanediol, 1,10-decanediol, 1,3-propanediol and dipropylene glycol. Depending on the desired properties, the dihydric alcohols can be used either alone or, if appropriate, in mixtures with one another. As polyester polyols, preference is given to using ethanediol polyadipates, 1,4-butanediol polyadipates, ethanediol-butanediol polyadipates, 1,6-hexanediol-neopentyl glycol polyadipates, 1,6-hexanediol-1,4-butanediol polyadipates and/or polycaprolactones.

Suitable polyoxyalkylene glycols, essentially polyoxytetramethylene glycols, comprising ester groups are polycondensates of organic, preferably aliphatic dicarboxylic acids, in particular adipic acid, with polyoxymethylene glycols having a number average molecular weight of from 162 to 600 and, if appropriate, aliphatic diols, in particular 1,4-butanediol. Further suitable polyoxytetramethylene glycols comprising ester groups are polycondensates derived from polycondensation with ε-caprolactone. Suitable polyoxyalkylene glycols, essentially polyoxytetramethylene glycols, comprising carbonate groups are polycondensates of these with alkyl or aryl carbonates or phosgene.

Information on the component (b) is provided by way of example in DE-A 195 48 771, page 6, lines 26 to 59.

In addition to the above-described components which are reactive towards isocyanates, it is additionally possible to use chain extenders and/or crosslinkers (c) having a molecular weight of less than 500, preferably from 60 to 499, for example compounds selected from the group consisting of bifunctional and/or trifunctional alcohols, bifunctional to tetrafunctional polyoxyalkylene polyols and alkyl-substituted aromatic diamines or mixtures of at least two of the chain extenders and/or crosslinkers mentioned. As (c), it is possible to use, for example, alkanediols having from 2 to 12, preferably 2, 4 or 6, carbon atoms, e.g. ethanediol, 1,3-propanediol, 1,5-pentanediol, 1,6-hexanediol, 1,7-heptanediol, 1,8-octanediol, 1,9-nonanediol, 1,10-decanediol and preferably 1,4-butanediol, dialkylene glycols having from 4 to 8 carbon atoms, e.g. diethylene glycol and dipropyleneglycol, and/or bifunctional to tetrafunctional polyoxyalkylene polyols. However, it is also possible to use branched-chain and/or unsaturated alkanediols having usually not more than 12 carbon atoms, e.g. 1,2-propanediol, 2-methyl-, 2,2-dimethyl-1,3-propanediol, 2-butyl-2-ethyl-1,3-propanediol, 2-butene-1,4-diol and 2-butyne-1,4-diol, diesters of terephthalic acid with glycols having from 2 to 4 carbon atoms, e.g. bis(ethylene glycol) or bis(1,4-butanediol) terephthalate, hydroxyalkylene ethers of hydroquinone or resorcinol, e.g. 1,4-di-(b-hydroxyethyl)hydroquinone or 1,3-di(b-hydroxyethyl)resorcinol, alkanolamines having from 2 to 12 carbon atoms, e.g. ethanolamine, 2-aminopropanol and 3-amino-2,2-dimethylpropanol, N-alkyl-dialkanolamines, such as N-methyldiethanolamine and N-ethyldiethanolamine. Examples of higher-functional crosslinkers (c) are trifunctional and higher-functional alcohols such as glycerol, trimethylolpropane, pentaerythritol and trihydroxycyclohexanes and also trialkanolamines such as triethanolamine.

Chain extenders which have been found to be very useful and are therefore preferably used are alkyl-substituted aromatic polyamines which have molecular weights of preferably from 122 to 400, in particular primary aromatic diamines which have at least one alkyl substituent which reduces the reactivity of the amino group by stearic hindrance in the ortho position relative to the amino groups and are liquid at room temperature and at least partly but preferably completely immiscible with the relatively high molecular weight, preferably at least bifunctional compounds (b) under the process conditions. To produce the moldings according to the invention, it is possible to use the industrially readily available 1,3,5-triethyl-2,4-phenylenediamine, 1-methyl-3,5-diethyl-2,4-phenylenediamine, mixtures of 1-methyl-3,5-diethyl-2,4- and -2,6-phenylenediamines, known as DETDA, isomer mixtures of 3,3'-dialkyl- or 3,3',5,5'-tetraalkyl-substituted 4,4'-diaminodiphenylmethanes having from 1 to 4 carbon atoms in the alkyl radical, in particular 3,3',5,5'-tetraalkyl-substituted 4,4'-diaminodiphenylmethanes comprising bound methyl, ethyl and isopropyl radicals and also mixtures of the above-mentioned tetraalkyl-substituted 4,4'-diaminodiphenylmethanes and DETDA.

To achieve specific mechanical properties, it can also be advantageous to use the alkyl-substituted aromatic polyamines in admixture with the above-mentioned low molecular weight polyhydric alcohols, preferably dihydric and/or trihydric alcohols or dialkylene glycols.

The production of the cellular polyisocyanate polyaddition products is preferably carried out in the presence of water (d). The water acts both as crosslinker to form urea groups and also, owing to the reaction with isocyanate groups to form carbon dioxide, as blowing agent. Owing to this dual function, it is listed separately from (c) and (f) in the present text. Thus, the components (c) and (f) by definition do not contain any water which by definition is listed exclusively as (d). The amounts of water which can advantageously be used are from 0.01 to 5 wt%, preferably from 0.3 to 3.0 wt%, based on the weight of the component (b), determined before addition of magnetizable particles.

To accelerate the reaction, generally known catalysts (e) can be added to the reaction mixture both during the preparation of a prepolymer and, if appropriate, during the reaction of a prepolymer with a crosslinker component. The catalysts (e) can be added either individually or in admixture with one another. They are preferably organic metal compounds such as tin(II) salts of organic carboxylic acids, e.g. tin(II) dioctoate, tin(II) dilaurate, dibutyltin diacetate and dibutyltin dilaurate and tertiary amines such as tetramethylethylenediamine, N-methylmorpholine, diethylbenzylamine, triethylamine, dimethylcyclohexylamine, diazabicyclooctane, N,N'-dimethylpiperazine, N-methyl,N'-(4-N-dimethylamino)butylpiperazine, N,N,N',N",N"-pentamethyldiethylenediamine or the like. Further possible catalysts are: amidines such as 2,3-dimethyl-3,4,5,6-tetrahydropyrimidine, tris(dialkylaminoalkyl)-s-hexahydrotriazines, in particular tris(N,N-dimethylaminopropyl)-s-hexahydrotriazine, tetraalkylammonium hydroxides such as tetramethylammonium hydroxide, alkali metal hydroxides such as sodium hydroxide and alkali metal alkoxides such as sodium methoxide and potassium isopropoxide and also alkali metal salts of long-chain fatty acids having from 10 to 20 carbon atoms and, if appropriate, lateral OH groups. Depending on the reactivity to be set, the catalysts (e) are employed in amounts of from 0.001 to 0.5 wt%, based on the weight of the prepolymer before addition of the magnetizable particles.

If appropriate, customary blowing agents (f) can be used in the production of the polyurethanes. Examples of suitable blowing agents are low-boiling liquids which vaporize under the action of the exothermic polyaddition reaction. Suitable blowing agents are liquids which are inert towards the organic polyisocyanate and have boiling points below 100°C. Examples of such liquids which are preferably used are halogenated, preferably fluorinated, hydrocarbons, e.g. methylene chloride and dichloromonofluoromethane, perfluorinated or partially fluorinated hydrocarbons, e.g. trifluoromethane, difluoromethane, difluoroethane, tetrafluoroethane and heptafluoropropane, hydrocarbons such as n-butane and isobutane, n-pentane and isopentane and also the industrial mixtures of these hydrocarbons, propane, propylene, hexane, heptane, cyclobutane, cyclopentane and cyclohexane, dialkyl ethers such as dimethyl ether, diethyl ether and furan, carboxylic esters such as methyl and ethyl formate, ketones such as acetone and/or fluorinated and/or perfluorinated tertiary alkylamines, e.g. perfluorodimethyliso-propylamine. Mixtures of these low-boiling liquids with one another and/or with other substituted or unsubstituted hydrocarbons can also be used. The most advantageous amount of low-boiling liquid for producing such cell-comprising elastic moldings of elastomers comprising bound urea groups depends on the density which is to be achieved and on the amount of the water which is preferably concomitantly used. In general, amounts of from 1 to 15 wt%, preferably from 2 to 11 wt%, based on the weight of the component (b), determined before addition of magnetizable particles, give satisfactory results. Particular preference is given to using exclusively water (d) as blowing agent.

Auxiliaries (g) can be used in the production of the moldings. These include, for example, generally known surface-active substances, foam stabilizers, cell regulators, fillers, flame retardants, nucleating agents, oxidation inhibitors, stabilizers, lubricants and mold release agents, dyes and pigments.

Possible surface-active substances are employed in the process according to the present invention or additionally, for example, compounds which serve to aid the homogenization of the starting materials, e.g. to homogenize and stabilize the polyol dispersions of the invention, and may also be suitable for regulating the cell structure. Mention may be made, for example, of emulsifiers such as the sodium salts of castor oil sulfates or fatty acids and also salts of fatty acids with amines, e.g. diethylamine oleate, diethanolamine stearate, diethanolamine ricinolate, salts of sulfonic acids, e.g. alkali metal or ammonium salts of dodecylbenzenedisulfonic or dinaphthylmethanedisulfonic acid and ricinolic acid; foam stabilizers such as siloxane-oxyalkylene copolymers and other organosiloxanes, ethoxylated alkylphenols, ethoxylated fatty alcohols, paraffin oils, castor oil esters or ricinolic esters, Turkey red oil and peanut oil and cell regulators such as paraffins, fatty alcohols and dimethylpolysiloxanes. Furthermore, oligomeric polyacrylates having polyoxyalkylene and fluoroalkane radicals as side groups are suitable for improving the emulsifying action, the cell structure and/or their stabilization. The surface-active substances are usually employed in amounts of from 0.01 to 5 parts by weight, based on 100 parts by weight of the relatively high molecular weight polyhydroxyl compounds (b) (without taking added magnetizable particles into account).

For the purposes of the present invention, fillers, in particular reinforcing fillers, which are different from the magnetizable particles, are the customary organic and inorganic fillers, reinforcing materials and weighting agents known per se. Specific examples are: inorganic fillers such as siliceous minerals, for example sheet silicates such as antigorite, serpentine, hornblendes, amphiboles, chrysotile, talc; metal oxides such as kaolin, aluminum oxides, aluminum silicate, and titanium oxides, metal salts such as chalk, barite and inorganic pigments such as cadmium sulfide, zinc sulfide and also glass particles. Examples of organic fillers are: carbon black, melamine, expanded graphite, rosin, cyclopentadienyl resins and graft polymers. As reinforcing fillers, preference is given to using fibers, for example carbon fibers or glass fibers, particularly when a high heat distortion resistance or very high stiffness is required, with the fibers being able to have been coated with bonding agents and/or sizes. The inorganic and organic fillers can be used individually or as mixtures and are usually incorporated into the reaction mixture in amounts of from 0.5 to 50 wt%, preferably from 1 to 30 wt%, based on the weight of the formative components (a) to (c), with the weight of any added magnetizable particles not being taken into account. The fillers are different from the magnetizable particles and a separate component.

Suitable flame retardants are, for example, tricresyl phosphate, tris(2-chloroethyl) phosphate, tris(2-chloropropyl) phosphate, tris(1,3-dichloropropyl) phosphate, tris(2,3-dibromopropyl) phosphate and tetrakis(2-chloroethyl) ethylenediphosphate. Apart from the above-mentioned halogen-substituted phosphates, it is also possible to use inorganic flame retardants such as red phosphorus, hydrated aluminum oxide, antimony trioxide, arsenic trioxide, ammonium polyphosphate and calcium sulfate or cyanuric acid derivatives such as melamine or mixtures of at least two flame retardants, e.g. ammonium phosphates and melamine and also, if appropriate, starch and/or expanded graphite, for making the cellular polyurethane elastomers produced according to the invention flame resistant. In general, it has been found to be advantageous to use from 5 to 50 parts by weight, preferably from 5 to 25 parts by weight, of the flame retardants or flame retardant mixtures mentioned per 100 parts by weight of the formative components (a) to (c), with the weight of any added magnetizable particles not being taken into account.

As nucleating agents, it is possible to use, for example, talc, calcium fluoride, sodium phenylphosphinate, aluminum oxide and finely divided polytetrafluoroethylene in amounts of up to 5 wt%, based on the total weight of the formative components (a) to (c), with the weight of any added magnetizable particles not being taken into account. Suitable oxidation inhibitors and heat stabilizers which can be added to the cellular polyurethane elastomers of the invention are, for example, halides of metals of group I of the Periodic Table, e.g. sodium, potassium, lithium halides, if appropriate in combination with copper (I) halides, e.g. chlorides, bromides or iodides, stearically hindered phenols, hydroquinones and also substituted compounds of these groups and mixtures thereof which are preferably used in concentrations up to 1 wt% based on the weight of the formative components (a) to (c). Examples of hydrolysis inhibitors are various substituted carbodiimides such as 2,2',6,6'-tetraisopropyldiphenylcarbodiimide which are generally used in amounts of up to 2.0 wt%, based on the weight of the formative components (a) to (c), with the weight of any added magnetizable particles not being taken into account. Lubricants and mold release agents, which are likewise usually added in amounts up to 1 wt%, based on the weight of the formative components (a) to (c), with the weight of any added magnetizable particles not being taken into account, are stearic acid, stearyl alcohol, stearic esters and stearylamides and also fatty acid esters of pentaerythritol. It is also possible to add organic dyes such as nigrosine, pigments such as titanium dioxide, cadmium sulfide, cadmium sulfide selenide, phthalocyanines, ultramarine blue or carbon black. It is also possible to add microbicides and/or organic colorants.

Further details regarding the above-mentioned other customary auxiliaries and additives may be found in the specialist literature.

When shoes or shoe soles are the polyurethane product to be prepared, reference can be made to EP-B-1 704 177, specifically the prior art section thereof.

The viscosity of the stabilizers and polyols was, unless indicated otherwise, determined at 25°C in accordance with DIN EN ISO 3219 from 1994 by means of a Rheotec RC20 rotational viscometer using the spindle CC 25 DIN (spindle diameter: 12.5 mm; internal diameter of measuring cylinder: 13.56 mm) at a shear rate of 100 1/s (instead of 50 1/s).

The particle size distribution of the dispersion was determined by static laser diffraction using a Mastersizer 2000 (Malvern Instruments Ltd) after dilution of the sample with isopropanol in order to obtain an optical concentration suitable for the measurement. For the dispersion of the sample a dispersing module Hydro SM was used with a stirrer speed of 2500 rpm. The calculation of the particle size distribution was performed by the Mastersizer 2000 using Fraunhofer theory.

The diameter D10 (x_{10,3}) defines the particle size at which 10 percent of the disperse phase volume of the particles are smaller. The diameter D50 (x_{50,3}) defines the particle size at which 50 percent of the disperse phase volume of the particles are smaller. The diameter D90 (x_{90,3}) defines the particle size at which 90 percent of the disperse phase volume of the particles are smaller. A more detailed description is available in DIN ISO 9276-2, 2009.

The following examples illustrate the invention.

### EXAMPLES

### 1) Graft polyol synthesis

### Magnetic graft polyol

75 g magnetite (Fe₃O₄) is added to 1425 g of a bifunctional highly active polyester polyol having primary hydroxyl end groups based on adipic acid, monoethylene glycol and diethylene glycol with a molecular weight of 2000 g/mol and an acid number of 0.8 mg_{KOH}/g_{Polymer} (Lupraphen® of BASF SE). The reaction mixture is heated up to 150°C under vigorous stirring (400 rpm) and further stirred for 1 h. The product was characterized by a viscosity of 700 mPas at 75°C.

### 2) Polyurethane foam preparation

The above described polyol (magnetic polyol) was applied in a standard PU-footwear-system. The formulation of polyol mixture is illustrated in Tab. 1:

**Tab. 1 Polyol mixture:**

| | |
|---|---|
| MEG | 6,73 |
| LUPRAGEN® N 203 | 1,69 |
| DABCO 1027 | 0,56 |
| Tensid-Tegostab® B 8443 | 0,28 |
| Tap water | 0,31 |
| Magnetic polyol | 90,74 |

The ingredients of the components are as follows:
- MEG:: Monoethylene glycol, Chain extender
- Lupragen® N 203:: Triethylendiamine (33 wt%) in monoethylene glycol (67 wt%) (Catalyst)
- Tensid-Tegostab® B 8443:: Foam Stabilizer from EVONIK
- Dabco® 1027:: Catalyst supplied by AIR PRODUCTS
- Tap water:: Blowing agent

The polyol mixture was mixed with a prepolymer (NCO 18.7%) from BASF SE composed of 4.4-MDI, modified isocyanate and a bifunctional highly active polyester polyol having primary hydroxyl end groups based on adipic acid, monoethylene glycol and diethylene glycol with a molecular weight of 2000 g/mol and cast into a footwear mold. An external magnet (1.29 to 1.32 tesla) is attached from outside of the mold in the middle of the forepart to influence the hardness of the foam in the mold at this area. The hardness of the foam along the forepart is different by local usage of external magnet. It differs from 50 Shore A in segments without magnetic field applied to 56 an 57 Shore A with applied magnetic field. We have repeated the same experiment without usage of the external magnet and the hardness is along the forepart overall the same 50 Shore A.

## Claims

1. A process for preparing a dispersion of magnetizable particles in polyol having ferromagnetic or ferrimagnetic properties by mechanical mixing of the magnetizable particles at a temperature in the range of from 80 to 260°C, preferably 100 to 220°C, more preferably 160 to 200°C with a polyol selected from the group consisting of polyesterols or polyether ester polyols having an acid number in the range of from 0.1 to1.0 mg KOH/g polymer, determined by DIN EN 12634 from 1999.

2. The process according to claim 1, wherein the amount of magnetizable particles, based on the sum of magnetizable particles and polyol, is 1 to 35 wt%, preferably 2 to 30 wt%, more preferably 5 to 20 wt%.

3. The process according to claims 1 or 2, wherein the polyesterols or polyether ester polyols have an acid number in the range of from 0.4 to 1.0.

4. The process according to one of claims 1 to 3, wherein the magnetizable particles are selected from the group consisting of iron, cobalt, nickel, alloys thereof, magnetite (Fe₃O₄), ferrite Fe₂O₃), perovskite, or mixtures thereof.

5. The process according to one of claims 1 to 4, wherein the mean longest dimension of the magnetizable particles is in the range of from 0.01 to 1000 µm, preferably 0.1 to 100 µm, more preferably 0.5 to 10 µm determined by static laser diffraction using a Mastersizer 2000 (Malvern Instruments Ltd) after dilution of the sample with isopropanol and dispersion of the sample with a dispersing module Hydro SM with a stirrer speed of 2500 rpm, the calculation of the particle size distribution being performed by the Mastersizer 2000 using Fraunhofer theory.

6. The process according to claim 5, wherein the magentizable particles are spherical and have a mean diameter (d₅₀) in the range of from 0.01 to 1000 µm, preferably 0.1 to 100 µm, more preferably 0.5 to 10 µm determined by static laser diffraction using a Mastersizer 2000 (Malvern Instruments Ltd) after dilution of the sample with isopropanol and dispersion of the sample with a dispersing module Hydro SM with a stirrer speed of 2500 rpm, the calculation of the particle size distribution being performed by the Mastersizer 2000 using Fraunhofer theory.

7. The process of one of claims 1 to 6, wherein the polyol is selected from 2- to 8-functional, preferably 2- to 6-functional polyether ester polyols and/or polyester polyols of a molecular weight (Mₙ) of from 500 to 30000 g/mol, preferably 1000 to 20000 g/mol.

8. The process of one of claims 1 to 7, wherein the polyol is a polyetherol prepared from at least one starter molecule comprising 2 to 8 reactive hydrogen atoms and one or more alkylene oxides having from 2 to 4 carbon atoms in the alkylene radical.

9. A dispersion of magnetizable particles having ferromagnetic or ferrimagnetic properties in a polyol selected from the group consisting of polyesterols or polyether ester polyols having an acid number in the range of from 0.1 to 1.0 mg KOH/g polymer, determined by DIN EN 12634 from 1999.

10. The use of a polyol selected from the group consisting of polyesterols or polyether ester polyols having an acid number in the range of from 0.1 to 1.0 mg KOH/g polymer, determind by DIN EN 12634 from 1999 for dispersing magnetizable particles having ferromagnetic or ferrimagnetic properties to form a dispersion of the magnetizable particles in the polyol.

11. The use of a dispersion according claim 9 for preparing a polyurethane.

12. A process for preparing a polyurethane, comprising mixing a dispersion of claim 9 or prepared by the process of one of claims 1 to 8 with polyisocyanates and, if appropriate, one or more further compounds having hydrogen atoms which are reactive towards isocyanates, chain extenders and/or crosslinkers, catalysts, blowing agents and further additives, and reacting the mixture to form the polyurethane, wherein a permanent magnetic field is applied to the mixture during its reaction to form the polyurethane, the permanent magnetic field preferably being sufficiently strong to orient or move the magnetizable particles within the mixture,
wherein the reaction takes place in a mold and the permanent magnetic field is applied to only parts of the mold so that part of the reacting mixture is under the influence of the magnetic field and other part of the reaction mixture is under no or less influence of the magnetic field during its reaction to form the polyurethane and
wherein the magnetic field is preferably applied in a perpendicular direction to the long axis of the mold and
wherein the hardness of the polyurethane is controlled by locally or totally adjusting the strength and/or duration of the magnetic field over the reaction time.

13. The process according to claim 12, wherein the polyurethane is a polyurethane foam and the mixture comprises blowing agents.

14. The process according to claim 12, wherein the polyurethane is a compact polyurethane material.

15. A polyurethane, obtainable by the process according to one of claims 12 to 14.

## Patentansprüche

1. Verfahren zur Herstellung einer Dispersion von magnetisierbaren Teilchen in Polyol mit ferromagnetischen oder ferrimagnetischen Eigenschaften durch mechanisches Mischen der magnetisierbaren Teilchen einer Temperatur im Bereich von 80 bis 260 °C, vorzugsweise 100 bis 220 °C, weiter bevorzugt 160 bis 200 °C, mit einem Polyol aus der Gruppe bestehend aus Polyesterolen oder Polyetheresterpolyolen mit einer gemäß DIN EN 12634 aus dem Jahre 1999 bestimmten Säurezahl im Bereich von 0,1 bis 1,0 mg KOH/g Polymer.

2. Verfahren nach Anspruch 1, wobei die Menge an magnetisierbaren Teilchen, bezogen auf die Summe von magnetisierbaren Teilchen und Polyol, 1 bis 35 Gew.-%, vorzugsweise 2 bis 30 Gew.-%, weiter bevorzugt 5 bis 20 Gew.-%, beträgt.

3. Verfahren nach Anspruch 1 oder 2, wobei die Polyesterole oder Polyetheresterpolyole eine Säurezahl im Bereich von 0,4 bis 1,0 aufweisen.

4. Verfahren nach einem der Ansprüche 1 bis 3, wobei die magnetisierbaren Teilchen aus der Gruppe bestehend aus Eisen, Cobalt, Nickel, Legierungen davon, Magnetit (Fe₃O₄), Ferrit (Fe₂O₃), Perowskit oder Mischungen davon ausgewählt werden.

5. Verfahren nach einem der Ansprüche 1 bis 4, wobei die nach Verdünnen der Probe mit Isopropanol und Dispergieren der Probe mit einem Dispergiermodul Hydro SM mit einer Rührergeschwindigkeit von 2500 U/min durch statische Laserbeugung unter Verwendung eines Mastersizer 2000 (Malvern Instruments Ltd) bestimmte mittlere längste Abmessung der magnetisierbaren Teilchen im Bereich von 0,01 bis 1000 µm, vorzugsweise 0,1 bis 100 µm, weiter bevorzugt 0,5 bis 10 µm, beträgt, wobei die Berechnung der Teilchengrößenverteilung von dem Mastersizer 2000 und Verwendung der Fraunhofer-Theorie durchgeführt wird.

6. Verfahren nach Anspruch 5, wobei die magnetisierbaren Teilchen kugelförmig sind und einen nach Verdünnen der Probe mit Isopropanol und Dispergieren der Probe mit einem Dispergiermodul Hydro SM mit einer Rührergeschwindigkeit von 2500 U/min durch statische Laserbeugung unter Verwendung eines Mastersizer 2000 (Malvern Instruments Ltd) bestimmten mittleren Durchmesser (d₅₀) im Bereich von 0,01 bis 1000 µm, vorzugsweise 0,1 bis 100 µm, weiter bevorzugt 0,5 bis 10 µm, beträgt, wobei die Berechnung der Teilchengrößenverteilung von dem Mastersizer 2000 und Verwendung der Fraunhofer-Theorie durchgeführt wird.

7. Verfahren nach einem der Ansprüche 1 bis 6, wobei das Polyol aus 2- bis 8-funktionellen, vorzugsweise 2-bis 6-funktionellen, Polyetheresterpolyolen und/oder Polyesterolen mit einem Molekulargewicht (Mₙ) von 500 bis 30.000 g/mol, vorzugsweise 1000 bis 20.000 g/mol, ausgewählt wird.

8. Verfahren nach einem der Ansprüche 1 bis 7, wobei es sich bei dem Polyol um ein aus mindestens einem Startermolekül mit 2 bis 8 reaktiven Wasserstoffatomen und einem oder mehreren Alkylenoxiden mit 2 bis 4 Kohlenstoffatomen im Alkylenrest hergestelltes Polyetherol handelt.

9. Dispersion von magnetisierbaren Teilchen mit ferromagnetischen oder ferrimagnetischen Eigenschaften in einem Polyol aus der Gruppe bestehend aus Polyesterolen oder Polyetheresterpolyolen mit einer gemäß DIN EN 12634 aus dem Jahre 1999 bestimmten Säurezahl im Bereich von 0,1 bis 1,0 mg KOH/g Polymer.

10. Verwendung eines Polyols aus der Gruppe bestehend aus Polyesterolen oder Polyetheresterpolyolen mit einer gemäß DIN EN 12634 aus dem Jahre 1999 bestimmten Säurezahl im Bereich von 0,1 bis 1,0 mg KOH/g Polymer zum Dispergieren von magnetisierbaren Teilchen mit ferromagnetischen oder ferrimagnetischen Eigenschaften in dem Polyol.

11. Verwendung einer Dispersion nach Anspruch 9 zur Herstellung eines Polyurethans.

12. Verfahren zur Herstellung eines Polyurethans, bei dem man eine Dispersion nach Anspruch 9 oder eine durch das Verfahren nach einem der Ansprüche 1 bis 8 hergestellte Dispersion mit Polyisocyanaten und gegebenenfalls einer oder mehreren weiteren Verbindungen mit Wasserstoffatomen, die gegenüber Isocyanaten reaktiv sind, Kettenverlängerungsmitteln und/oder Vernetzern, Katalysatoren, Treibmitteln und weiteren Additiven mischt und die Mischung zur Bildung des Polyurethans umsetzt, wobei an die Mischung während ihrer Umsetzung zur Bildung des Polyurethans ein permanentes Magnetfeld angelegt wird, wobei das permanente Magnetfeld vorzugsweise stark genug ist, um die magnetisierbaren Teilchen in der Mischung zu orientieren oder zu bewegen,
wobei die Umsetzung in einer Form stattfindet und das permanente Magnetfeld nur an Teile der Form angelegt wird, so dass sich ein Teil der reagierenden Mischung unter dem Einfluss des Magnetfelds befindet und sich ein anderer Teil der Reaktionsmischung während seiner Umsetzung zur Bildung des Polyurethans unter keinem oder weniger Einfluss des Magnetfelds befindet, und wobei das Magnetfeld vorzugsweise in einer zur Längsachse der Form senkrechten Richtung angelegt wird und
wobei die Härte des Polyurethans durch lokale oder vollständige Einstellung der Stärke und/oder Dauer des Magnetfelds über die Reaktionszeit gesteuert wird.

13. Verfahren nach Anspruch 12, wobei es sich bei dem Polyurethan um einen Polyurethanschaumstoff handelt und die Mischung Treibmittel umfasst.

14. Verfahren nach Anspruch 12, wobei es sich bei dem Polyurethan um ein kompaktes Polyurethanmaterial handelt.

15. Polyurethan, das durch das Verfahren nach einem der Ansprüche 12 bis 14 erhältlich ist.

## Revendications

1. Procédé de préparation d'une dispersion de particules aimantables dans un polyol ayant des propriétés ferromagnétiques ou ferrimagnétiques par mélange mécanique des particules aimantables à une température dans la plage de 80 à 260 °C, de préférence 100 à 220 °C, plus préférablement 160 à 200 °C avec un polyol choisi dans le groupe constitué des polyestérols ou des polyéther ester polyols ayant un indice d'acide dans la plage de 0,1 à 1,0 mg de KOH/g de polymère, déterminé selon DIN EN 12634 de 1999.

2. Procédé selon la revendication 1, dans lequel la quantité de particules aimantables, sur la base de la somme des particules aimantables et du polyol, est de 1 à 35 % en poids, de préférence 2 à 30 % en poids, plus préférablement 5 à 20 % en poids.

3. Procédé selon les revendications 1 ou 2, dans lequel les polyestérols ou polyéther ester polyols ont un indice d'acide dans la plage de 0,4 à 1,0.

4. Procédé selon l'une des revendications 1 à 3, dans lequel les particules aimantables sont choisies dans le groupe constitué du fer, du cobalt, du nickel, d'alliages de ceux-ci, de la magnétite (Fe₃O₄), de la ferrite (Fe₂O₃), de la pérovskite, ou des mélanges de ceux-ci.

5. Procédé selon l'une des revendications 1 à 4, dans lequel la plus longue dimension moyenne des particules aimantables est dans la plage de 0,01 à 1000 µm, de préférence 0,1 à 100 µm, plus préférablement 0,5 à 10 µm déterminée par diffraction laser statique au moyen d'un Mastersizer 2000 (Malvern Instruments Ltd) après dilution de l'échantillon avec de l'isopropanol et dispersion de l'échantillon avec un module de dispersion Hydro SM avec une vitesse d'agitateur de 2500 trs/min, le calcul de la distribution granulométrique étant effectué par le Mastersizer 2000 au moyen de la théorie de Fraunhofer.

6. Procédé selon la revendication 5, dans lequel les particules aimantables sont sphériques et ont un diamètre moyen (d₅₀) dans la plage de 0,01 à 1000 µm, de préférence 0,1 à 100 µm, plus préférablement 0,5 à 10 µm déterminé par diffraction laser statique au moyen d'un Mastersizer 2000 (Malvern Instruments Ltd) après dilution de l'échantillon avec de l'isopropanol et dispersion de l'échantillon avec un module de dispersion Hydro SM avec une vitesse d'agitateur de 2500 trs/min, le calcul de la distribution granulométrique étant effectué par le Mastersizer 2000 au moyen de la théorie de Fraunhofer.

7. Procédé selon l'une des revendications 1 à 6, dans lequel le polyol est choisi parmi les polyéther ester polyols et/ou les polyester polyols ayant 2 à 8 fonctions, de préférence 2 à 6 fonctions ayant un poids moléculaire (Mₙ) de 500 à 30 000 g/mol, de préférence 1000 à 20 000 g/mol.

8. Procédé selon l'une des revendications 1 à 7, dans lequel le polyol est un polyétherol préparé à partir d'au moins une molécule de départ comprenant 2 à 8 atomes d'hydrogène réactifs et un ou plusieurs oxydes d'alkylène ayant de 2 à 4 atomes de carbone dans le radical alkylène.

9. Dispersion de particules aimantables ayant des propriétés ferromagnétiques ou ferrimagnétiques dans un polyol choisi dans le groupe constitué des polyestérols ou des polyéther ester polyols ayant un indice d'acide dans la plage de 0,1 à 1,0 mg de KOH/g de polymère, déterminé selon DIN EN 12634 de 1999.

10. Utilisation d'un polyol choisi dans le groupe constitué des polyestérols ou des polyéther ester polyols ayant un indice d'acide dans la plage de 0,1 à 1,0 mg de KOH/g de polymère, déterminé selon DIN EN 12634 de 1999 pour disperser des particules aimantables ayant des propriétés ferromagnétiques ou ferrimagnétiques pour former une dispersion des particules aimantables dans le polyol.

11. Utilisation d'une dispersion selon la revendication 9 pour préparer un polyuréthane.

12. Procédé de préparation d'un polyuréthane, comprenant le mélange d'une dispersion selon la revendication 9 ou préparée par le procédé selon l'une des revendications 1 à 8 avec des polyisocyanates et, le cas échéant, un ou plusieurs composés supplémentaires comportant des atomes d'hydrogène qui sont réactifs avec des isocyanates, des extenseurs de chaîne et/ou des agents de réticulation, des catalyseurs, des agents gonflants et des additifs supplémentaires, et la réaction du mélange pour former le polyuréthane, dans lequel un champ magnétique permanent est appliqué au mélange pendant sa réaction pour former le polyuréthane, le champ magnétique permanent étant de préférence suffisamment intense pour orienter ou déplacer les particules aimantables dans le mélange,
dans lequel la réaction est conduite dans un moule et le champ magnétique permanent est appliqué uniquement à des parties du moule de sorte qu'une partie du mélange de réaction est sous l'influence du champ magnétique et une autre partie du mélange de réaction est sous une influence nulle ou réduite du champ magnétique pendant sa réaction pour former le polyuréthane et
dans lequel le champ magnétique est de préférence appliqué dans une direction perpendiculaire au grand axe du moule et
dans lequel la dureté du polyuréthane est régulée par ajustement local ou total de l'intensité et/ou la durée du champ magnétique au cours du temps de réaction.

13. Procédé selon la revendication 12, dans lequel le polyuréthane est une mousse de polyuréthane et le mélange comprend des agents gonflants.

14. Procédé selon la revendication 12, dans lequel le polyuréthane est un matériau de polyuréthane compact.

15. Polyuréthane, pouvant être obtenu par le procédé selon l'une des revendications 12 à 14.
